# DEMANDE DE BREVET EUROPEEN

(11) **EP 1 566 245 A1**
(43) Date de publication de la demande: **24.08.2005**
(21) Numéro de dépôt: 05290388.7
(22) Date de dépôt: 21.02.2005
(51) Int. Cl.: B25J 9/16

(54) **Procédé et dispositif de traitement d'une commande de robot effectuée par l'intermédiaire d'un dispositif de commande distant relié par un réseau de télécommunication à un serveur**

(30) Priorité: 23.02.2004 FR 0401796
(71) Demandeur: FRANCE TELECOM, 75015 Paris (FR)
(72) Inventeur: Guegan-Bourgoin, Delphine, 35830 Betton (FR); Martin, Frédöric, 35830 Betton (FR); Jumpertz, Sylvie, 35000 Rennes (FR)
(74) Mandataire: Maillet, Alain

(57) **Abrégé**

L'invention concerne un procédé et un dispositif de traitement d'une commande de robot (180) effectuée par l'intermédiaire d'un dispositif de commande distant (110) relié par un réseau de télécommunication (150) à un serveur(100), dans lesquels on associe à une étiquette et à une valeur d'étiquette une commande et/ou d'un paramètre de commande, l'étiquette et la valeur d'étiquette faisant partie d'un groupe prédéterminé d'étiquettes et de valeurs d'étiquettes connu du groupe de dispositifs de commande distants dont le dispositif de commande distant fait partie, on traduit la commande et/ou le paramètre de commande en au moins une commande exécutable dans un langage interprétable par le robot (180) et on transfère la ou chaque commande exécutable audit robot.

## Description

La présente invention concerne un procédé et un dispositif de traitement d'une commande de robot effectuée par l'intermédiaire d'un dispositif de commande distant relié par un réseau de télécommunication à un serveur de télésurveillance.

L'invention se situe dans le domaine de la télésurveillance d'un environnement prédéterminé à l'aide d'un robot.

Sont connus des dispositifs de télécommande de robots tels que les robots d'intervention dans des sites dangereux, les robots de déminage ou les robots d'exploration. Les dispositifs de commande de ces robots sont tous adaptés aux spécificités des robots télécommandés et sont spécifiquement développés pour une de ces applications particulières. La plupart de ces robots sont commandés à partir de systèmes de communication tels que des systèmes filaires, radio ou infrarouges et il n'est donc pas possible de commander des robots à partir de points éloignés de ceux-ci. Les robots d'exploration peuvent quant à eux être commandés à partir de points très éloignés. Pour ces robots, des télécommandes complexes et coûteuses sont utilisées. Les dispositifs de commande de ces robots utilisent des protocoles et des langages dédiés réservés à des spécialistes d'un domaine scientifique donné.

Dans l'état de la technique tel que susmentionné, les dispositifs de commande existants sont dédiés au robot qu'ils commandent. Le lien entre le dispositif de commande et le robot télécommandé est souvent un lien point à point et utilise un langage spécifique à l'application.

L'invention a pour but de résoudre les inconvénients de l'art antérieur en proposant un procédé et un dispositif de traitement d'une commande de robot effectuée par l'intermédiaire d'un dispositif de commande distant relié par un réseau de télécommunication à un serveur qui soit apte à assurer la commande de différents types de robots sans nécessiter de langage de commande spécifique à chaque robot entre le dispositif de commande et le serveur.

De plus, l'invention propose un procédé et un dispositif de traitement d'une commande de robot effectuée par l'intermédiaire d'un dispositif de commande distant classique et non dédié à la commande de robots.

A cette fin, selon un premier aspect, l'invention propose un procédé de traitement d'une commande de robot effectuée par l'intermédiaire d'un dispositif de commande distant faisant partie d'un groupe de dispositifs de commande distants, le dispositif de commande étant relié par un réseau de télécommunication à un serveur, caractérisé en ce que le procédé comporte les étapes d'association à une étiquette et à une valeur d'étiquette d'une commande et/ou d'un paramètre de commande, l'étiquette et la valeur d'étiquette faisant partie d'un groupe prédéterminé d'étiquettes et de valeurs d'étiquettes connu des dispositifs de commande distants appartenant au groupe de dispositifs de commande distants, de traduction de la commande et/ou du paramètre de commande en au moins une commande exécutable dans un langage interprétable par le robot et de transfert de la ou de chaque commande exécutable audit robot.

Corrélativement, l'invention concerne un serveur de télésurveillance pour le traitement d'une commande de robot effectuée par l'intermédiaire d'un dispositif de commande distant faisant partie d'un groupe de dispositifs de commande distants, le dispositif de commande étant relié par un réseau de télécommunication à un serveur, caractérisé en ce que le serveur comporte des moyens d'association à une étiquette et à une valeur d'étiquette d'une commande et/ou d'un paramètre de commande, l'étiquette et la valeur d'étiquette faisant partie d'un groupe prédéterminé d'étiquettes et de valeurs d'étiquettes connu des dispositifs de commande distants appartenant au groupe de dispositifs de commande distants, des moyens de traduction de la commande et/ou du paramètre de commande en au moins une commande exécutable dans un langage interprétable par le robot et des moyens de transfert de la ou chaque commande exécutable audit robot.

Ainsi, en associant à une étiquette et une valeur d'étiquette au moins un paramètre de commande à partir de l'étiquette et de la valeur d'étiquette il est possible d'utiliser des commandes classiques utilisées par des dispositifs classiques dans d'autres applications que celle de la présente invention. En traduisant le ou chaque paramètre de commande en au moins une commande exécutable dans un langage interprété par le robot, il n'est pas nécessaire de modifier la commande générée par le dispositif de commande lorsque le robot ou le type de robot est modifié.

Selon un autre aspect de l'invention, le robot effectue un parcours de référence dans un environnement prédéterminé à des moments prédéterminés. Le parcours de référence comprend des points prédéfinis et le serveur de télésurveillance mémorise des informations obtenues par le robot aux points prédéterminés.

Ainsi, il est possible de surveiller à distance un environnement prédéterminé tel qu'une habitation sans avoir recours à des dispositifs de commande spécifiques au robot. En définissant des points prédéterminés, il est possible de surveiller un environnement en ne mémorisant qu'une quantité limitée d'informations.

Selon un autre aspect de l'invention, on compare les informations mémorisées avec des informations d'un parcours de référence et on génère au moins un message à destination du dispositif de commande si les informations mémorisées sont différentes des informations du parcours de référence.

Ainsi, si un événement survient, l'utilisateur d'un tel système de télésurveillance est prévenu rapidement.

De plus, en ne transférant des messages que lorsque les informations reçues sont différentes ou significativement différentes des informations mémorisées, la quantité d'informations transmises sur le réseau de télécommunication est réduite. De plus, l'utilisateur d'un tel système de télésurveillance n'est prévenu que lorsque cela est nécessaire.

Selon un autre aspect de l'invention, on transfère des données représentatives d'une interface utilisateur au dispositif de commande distant pour commander le robot.

Ainsi, il est possible d'utiliser un dispositif classique comme dispositif de commande.

Selon un autre aspect de l'invention, l'interface utilisateur est adaptée au type de dispositif de commande.

Selon un autre aspect de l'invention, le robot évolue dans un environnement prédéterminé, on détermine la position du robot dans l'environnement prédéterminé, on transfère une représentation graphique de l'environnement prédéterminé au dispositif de commande et on transfère la position déterminée au dispositif de commande.

Ainsi, l'utilisateur d'un tel système de télésurveillance peut de manière aisée savoir où se trouve le robot et déterminer aisément les commandes appropriées au robot pour obtenir les informations qu'il souhaite.

Selon un autre aspect de l'invention, on transfère des informations obtenues par le robot sur l'environnement dans lequel il évolue.

Ainsi, au fur et à mesure que des commandes sont transmises au robot, l'utilisateur est informé sur l'environnement dans lequel évolue le robot.

Selon un autre aspect de l'invention, les informations obtenues sont au moins une image ou des relevés de mesures de capteurs.

Ainsi, le contrôle du robot dans son environnement à partir d'images est simplifié pour l'utilisateur.

Selon un autre aspect de l'invention, les informations transférées entre le serveur de télésurveillance et le robot sont transférées par l'intermédiaire d'un autre réseau de télécommunication sans fil.

Selon un autre aspect de l'invention, les informations transférées entre le serveur de télésurveillance et le robot sont transférées par l'intermédiaire du réseau de télécommunication, d'une passerelle entre le réseau de télécommunication et un autre réseau de télécommunication.

Ainsi, le serveur de télésurveillance peut être placé sur un site distant de l'environnement dans lequel évolue le robot.

L'invention concerne aussi une étiquette pour la commande d'un robot par l'intermédiaire d'un dispositif de commande relié par un réseau de télécommunication à un serveur, caractérisée en ce que l'étiquette est une étiquette pour diriger le robot ou une étiquette de mise du robot dans un mode de fonctionnement prédéterminé ou une étiquette de définition de la vitesse du robot ou une étiquette de sélection d'un robot parmi un ensemble de robots ou une étiquette d'actionnement d'au moins un capteur du robot et en ce qa'à l'étiquette est associée une valeur.

L'invention concerne aussi les programmes d'ordinateurs stockés sur un support d'informations, lesdits programmes comportant des instructions permettant de mettre en oeuvre le procédé de traitement précédemment décrit, lorsqu'il est chargé et exécuté par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente l'architecture du système de télésurveillance de la présente invention ;
la Fig. 2 représente un schéma bloc du serveur de télésurveillance selon la présente invention ;
la Fig. 3 représente un exemple de parcours prédéfini effectué par un robot de télésurveillance selon la présente invention ;
la Fig. 4 représente un algorithme effectué par le serveur de télésurveillance de détection et de notifications d'évènements selon la présente invention ;
les Figs. 5a et 5b représentent l'algorithme de traitement de commandes effectué par le serveur de télésurveillance, les commandes étant générées par un dispositif de commande distant pour le contrôle du robot de surveillance ;
la Fig. 6 représente un tableau comprenant des informations utilisées par le module de référence aux étiquettes selon la présente invention ;
la Fig. 7 représente un tableau comprenant des informations utilisées par le module d'interprétation des étiquettes selon la présente invention ;
la Fig. 8 représente un tableau comprenant des informations utilisées par le module de commande robot selon la présente invention ;
la Fig. 9 représente un exemple d'interface homme machine reproduite par l'écran d'un dispositif de commande.

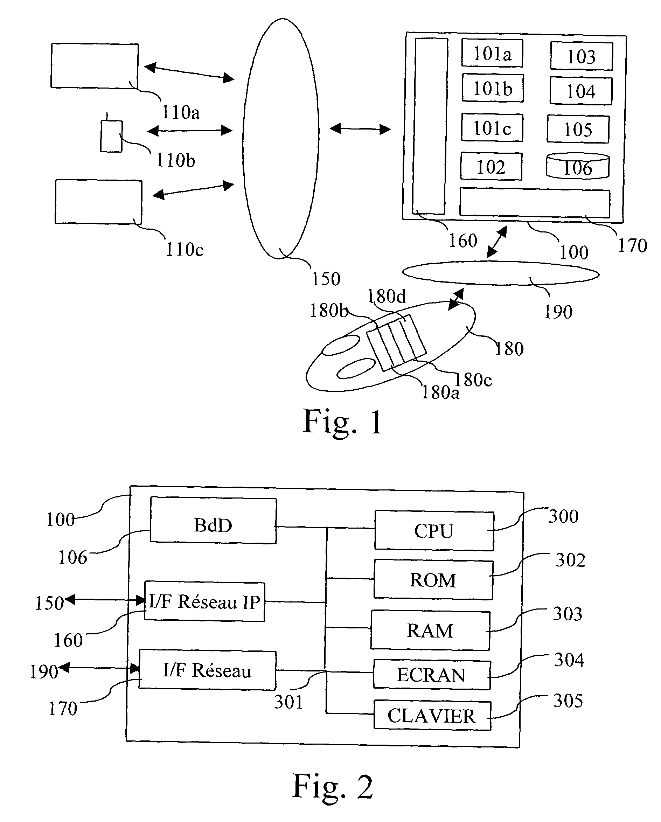

La Fig. 1 représente l'architecture du système de télésurveillance selon la présente invention.

Dans le système de télésurveillance selon la présente invention, un utilisateur commande le déplacement ainsi que différentes opérations effectuées par un robot 180 par l'intermédiaire d'un dispositif de commande 110 relié par l'intermédiaire d'un réseau de télécommunication 150 à un serveur de télésurveillance 100 placé à proximité du robot 180, par exemple dans l'environnement que doit surveiller le robot 180.

Le robot 180 est un robot apte à se déplacer dans un environnement tel que l'habitation de l'utilisateur du système de télésurveillance de la présente invention. Le robot 180 est par exemple un robot commercialisé par la société Wany Robotics © sous la dénomination de robot Pekee ©. Le robot 180 comprend un module de commande 180a apte à commander les différents éléments du robot 180. Le module de commande 180a contrôle entre autres les moyens de déplacement du robot 180 en fonction de commandes reçues du serveur de télésurveillance 100 ou en fonction d'informations reçues d'un module de mesure de distances 180b entre le robot 180 et d'éventuels obstacles susceptibles de gêner le parcours du robot 180. Le module de commande 180a reçoit du serveur de télésurveillance 100, par l'intermédiaire d'une interface réseau 180c et d'un réseau de télécommunication sans fil 190, différents signaux de commande. Le module de commande 180a contrôle le déplacement du robot 180 et/ou l'activation des différents capteurs équipant le robot 180 en fonction de ces signaux de commande. Les différents capteurs sont par exemple un dispositif de capture d'informations audiovisuelles tel qu'une caméra 180d, un capteur de température, voire un capteur infrarouge.

Le module de commande 180a transfère au serveur de télésurveillance 100, par l'intermédiaire de l'interface réseau 180c et du réseau de télécommunication sans fil 190, des images et/ou des séquences d'images et/ou les mesures effectuées par le capteur de température ou le capteur de mesure infrarouge.

Le réseau de télécommunication sans fil 190 est par exemple un réseau de télécommunication de type WiFi. Le « WiFi » © pour « Wireless Fidelity » est le nom commercial de la norme 802.11. Le réseau de télécommunication sans fil 190 est en variante un réseau de type « Bluetooth » © ou un réseau de type « zigBee » ©.

Le serveur de télésurveillance 100 est, selon le premier mode de réalisation de la présente invention, un ordinateur placé dans l'habitation de l'utilisateur du système de télésurveillance. Le serveur de télésurveillance 100 est apte à échanger des informations avec un dispositif de commande 110a ou 110b ou 110c par l'intermédiaire du réseau de télécommunication 150. Le serveur de télésurveillance 100 est aussi apte à échanger des informations avec le robot 180 par l'intermédiaire du réseau de télécommunication 190. Le serveur de télésurveillance 100 comprend une interface réseau de télécommunication sans fil 170 permettant l'échange d'informations par l'intermédiaire du réseau de télécommunication 190 et une interface réseau de télécommunication 160 permettant l'échange d'informations par l'intermédiaire du réseau de télécommunication 150. Le serveur de télésurveillance 100 comprend des modules de présentation 101. Ces modules de présentation 101 sont des modules qui définissent l'interface homme machine qui sera reproduite par le dispositif de commande 110 utilisé par l'utilisateur du système de télésurveillance selon l'invention.

Le module de présentation 101 a est un module de présentation dédié au dispositif de commande 110a. Le dispositif de commande 110a est par exemple l'ordinateur de l'utilisateur du système de télésurveillance selon l'invention situé sur son lieu de travail ou dans une autre résidence de l'utilisateur.

Le module de présentation 101b est un module de présentation dédié au dispositif de commande 110b. Le dispositif de commande 110b est par exemple le téléphone mobile de l'utilisateur du système de télésurveillance selon l'invention. Le téléphone mobile 110b est par exemple un téléphone mobile de type SPV E200 commercialisé par la société Orange ©.

Le module de présentation 101c est un module de présentation dédié au dispositif de commande 110c. Le dispositif de commande 110c est par exemple un assistant personnel de l'utilisateur du système de télésurveillance selon l'invention.

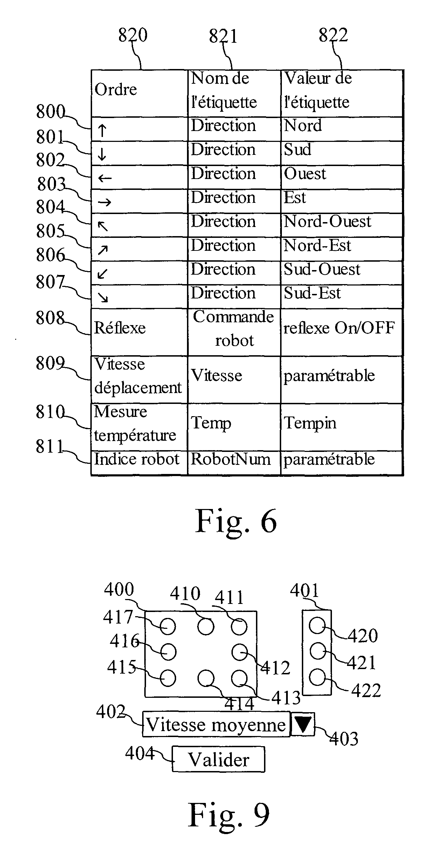

Le serveur de télésurveillance 100 comprend un module de référence d'étiquettes 103. Ce module permet d'associer, lorsque l'utilisateur utilise le clavier d'un dispositif de commande 110 pour effectuer une commande du robot 180, une information prédéterminée. Le module de référence d'étiquettes 103 utilise pour cela les informations comprises dans le tableau de la Fig. 6. Lorsque l'utilisateur utilise une page pour la commande du robot 180 transférée par le serveur de télésurveillance 100 au dispositif de commande 110, les étiquettes sont directement associées aux commandes au niveau du dispositif de commande 110 et sont transférées au serveur de télésurveillance 100 par l'intermédiaire du réseau de télécommunication 150.

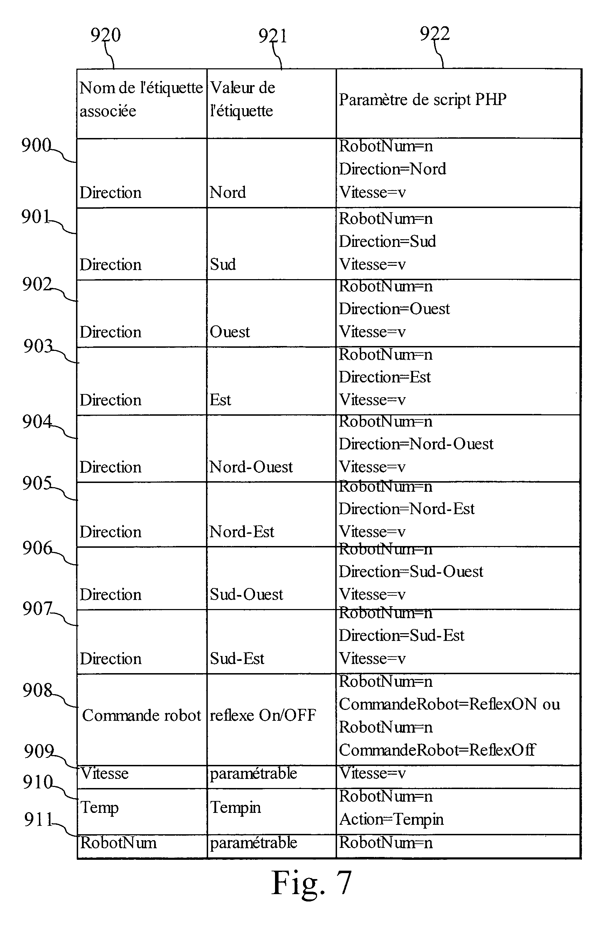

Le serveur de télésurveillance 100 comprend un module d'interprétation 104. Ce module permet d'associer à chacune des étiquettes traitées par le module de référence d'étiquettes 103 ou reçues du dispositif de commande 110 par l'intermédiaire du réseau de télécommunication 150, au moins un paramètre de commande prédéterminé. Le module d'interprétation 104 utilise pour cela les informations comprises dans le tableau de la Fig. 7.

Le serveur de télésurveillance 100 comprend un module d'interprétation de macro-commandes 102. Ce module permet d'associer à une étiquette prédéfinie un ensemble de commandes prédéterminées. Lorsque le module d'interprétation 104 reçoit une étiquette de macro-commande, celui-ci interroge le module d'interprétation de macro-commandes 102 pour obtenir les étiquettes correspondant à l'étiquette de macro-commande à traiter. Il est à remarquer ici qu'une macro-commande est indépendante du type de dispositif de commande utilisé. Une étiquette de macro-commande est par exemple une étiquette représentative d'une commande de déplacement du robot 180 à un point prédéterminé et l'exécution de mesures. Cette étiquette de macro-commande est par exemple associée à une touche prédéterminée d'un dispositif de commande telle que la touche « * » d'un téléphone mobile ou d'un clavier d'ordinateur.

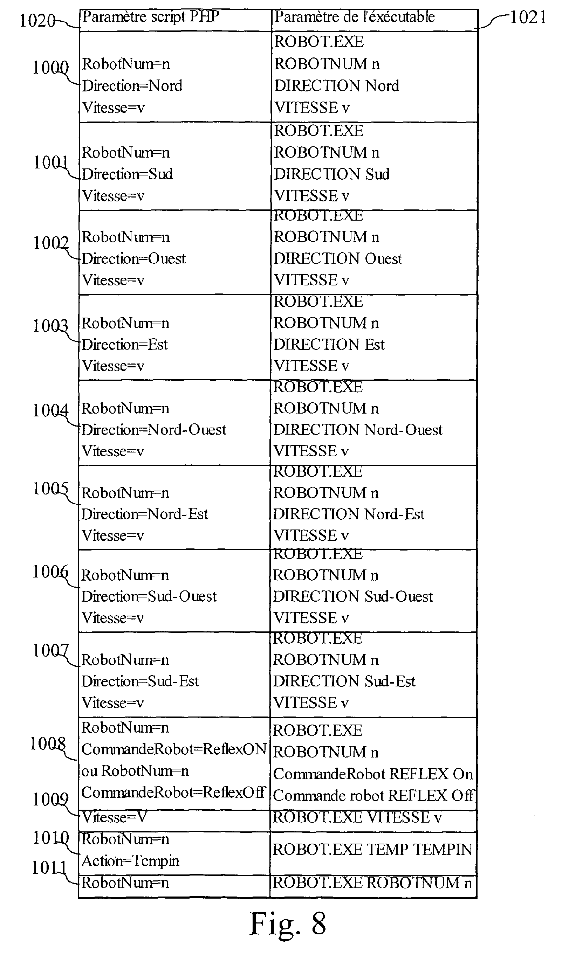

Le serveur de télésurveillance 100 comprend un module de commande robot 105. Ce module permet d'associer pour chaque paramètre de commande déterminé par module d'interprétation 104 une ou plusieurs commandes interprétables par le robot 180. Le module de commande robot 105 est adapté au type de robot 180 utilisé dans la présente invention. Le module de commande robot 105 utilise pour cela les informations comprises dans le tableau de la Fig. 8.

Le serveur de télésurveillance 100 comprend aussi une base de données 106. Cette base de données 106 comprend des parcours de référence par l'utilisateur du système de télésurveillance qui sont exécutés périodiquement par le robot 180 ainsi que des images de référence et des relevés de mesures de référence. La base de données 106 comprend aussi les différentes images ou séquences d'images prises par la caméra 180d du robot 180 ainsi que les différentes mesures prises par les capteurs équipant le robot 180 lors de l'exécution de précédents parcours de référence.

Le serveur de télésurveillance 100 sera décrit plus en détail en référence à la Fig. 2.

Le réseau de télécommunication 150 est par exemple un réseau de télécommunication de type ADSL. ADSL est l'acronyme de « Asymetric Digital Subscriber Line ».

Le dispositif de commande 110a comporte un modem pour transférer des commandes au robot 180 par l'intermédiaire du réseau de télécommunication 150 et du serveur de télésurveillance 100. Le dispositif de commande 110a comporte aussi un écran pour afficher une page de présentation générée par le module de présentation 101a du serveur de télésurveillance 100. Le dispositif de commande 110a comporte aussi un clavier et/ou une souris que l'utilisateur manipule pour commander le robot 180 par l'intermédiaire du réseau de télécommunication 150 et du serveur de télésurveillance 100. Il est à remarquer que le dispositif de commande 110a peut en variante être connecté au réseau de télécommunication 150 par l'intermédiaire d'un réseau de type Wifi ou un réseau téléphonique cellulaire de type GPRS. Le dispositif de commande 110a transfère des commandes au robot 180 par l'intermédiaire du réseau téléphonique cellulaire auquel il est relié, du réseau de télécommunication 150 et du serveur de télésurveillance 100.

Le dispositif de commande 110b comporte aussi un écran pour afficher entre autres une page de présentation générée par le module de présentation 101b du serveur de télésurveillance 100. Le dispositif de commande 110b comporte aussi un clavier et/ou des moyens de navigation sur un écran que l'utilisateur manipule pour commander le robot 180 par l'intermédiaire du réseau téléphonique cellulaire auquel il est relié, du réseau de télécommunication 150 et du serveur de télésurveillance 100.

Le dispositif de commande 110c transfère des commandes au robot 180 par l'intermédiaire d'un réseau local sans fil auquel il est relié, du réseau de télécommunication 150 et du serveur de télésurveillance 100. Le dispositif de commande 110c comporte aussi un écran pour afficher entre autres une page de présentation générée par le module de présentation 101c du serveur de télésurveillance 100. Le dispositif de commande 110c comporte des moyens de navigation sur un écran que l'utilisateur manipule pour commander le robot 180 par l'intermédiaire du réseau local sans fil, du réseau de télécommunication 150 et du serveur de télésurveillance 100.

Dans une variante de réalisation, le serveur de télésurveillance 100 est placé sur un site distant des environnements à surveiller. Dans cette variante, des utilisateurs commandent à l'aide de dispositifs de commande respectifs 110 le déplacement ainsi que différentes opérations effectuées par leur robot 180 respectif par l'intermédiaire d'un réseau de télécommunication 150, d'un serveur de télésurveillance 100 associé au réseau de télécommunication 150, et d'une passerelle de télécommunication respective assurant l'interface entre le réseau de télécommunication 150 et un réseau de télécommunication sans fil 190 de chaque utilisateur. Selon cette variante, le serveur de télésurveillance 100 gère la télésurveillance d'une pluralité d'habitations et assure le contrôle des robots placés dans chacune des habitations. L'échange d'informations entre le serveur de maintien sécurisé de personnes à domicile 100 et les robots est effectué par l'intermédiaire du réseau de télécommunication 150 auquel est reliée une passerelle placée dans chaque habitation à surveiller. Chaque passerelle assure le transfert d'informations entre le réseau de télécommunication 150 et un réseau sans fil tel qu'un réseau Wifi © ou ZigBee © reliant la passerelle au robot présent dans l'habitation. La passerelle est par exemple une passerelle entre un réseau de télécommunication ADSL 150 et un réseau de télécommunication de type Wifi. Selon la variante de réalisation de la présente invention, une passerelle est placée au domicile de chaque utilisateur du système de télésurveillance.

La Fig. 2 représente un schéma bloc du serveur de télésurveillance selon la présente invention.

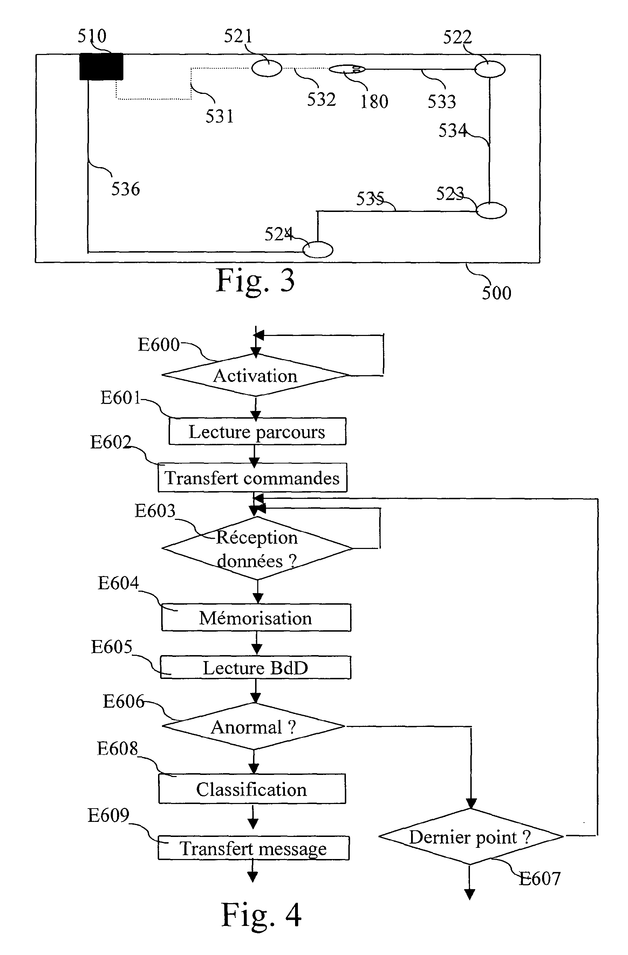

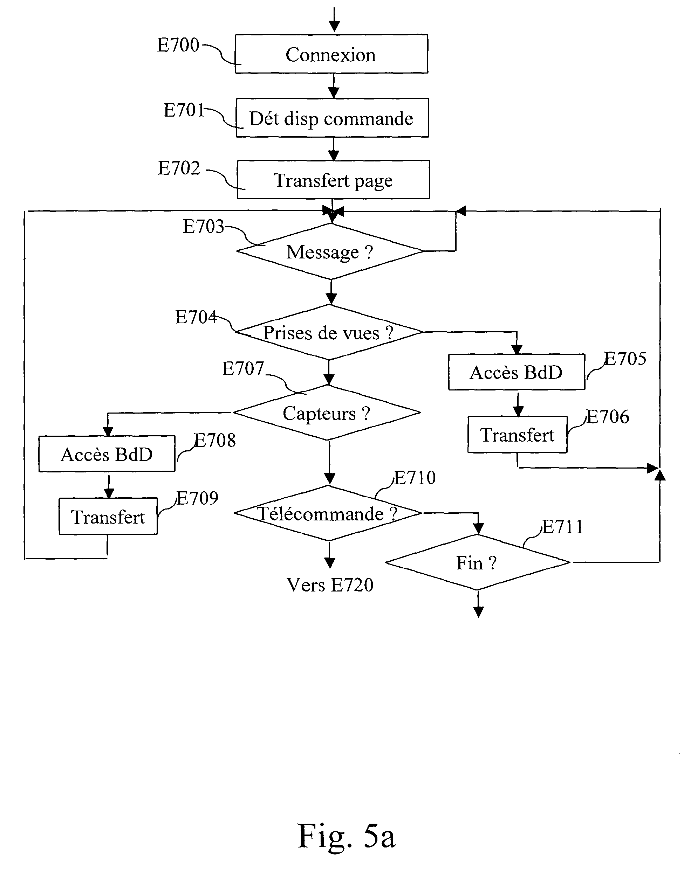

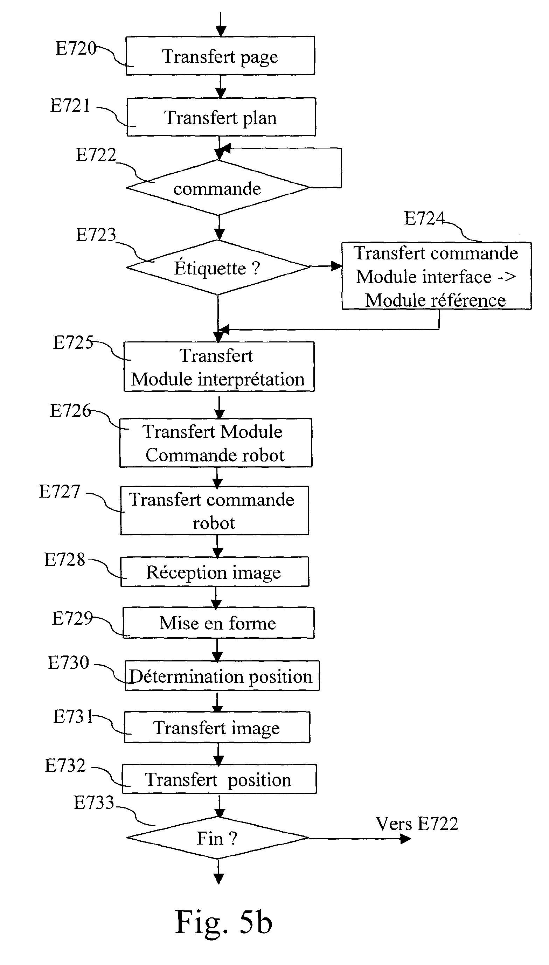

Le serveur de télésurveillance 100 est par exemple un ordinateur placé au domicile de l'utilisateur du système de télésurveillance selon la présente invention. Le serveur de télésurveillance 100 comporte un bus de communication 301 auquel sont reliés une unité centrale 300, une mémoire non volatile 302, une mémoire vive 303, une base de données 106, deux interfaces réseau 160 et 170 ainsi qu'un écran 304 et un clavier 305. La mémoire non volatile 302 mémorise les programmes mettant en oeuvre l'invention qui seront décrits ultérieurement en référence aux Figs. 4, 5a et 5b. La mémoire non volatile 302 mémorise aussi les modules de présentation 101a, 101b et 101c, le module de référence d'étiquettes 103, le module d'interprétation de macro-commandes 102, le module d'interprétation 104 et le module de commande robot 205. La mémoire non volatile 302 mémorise aussi les tableaux tels que ceux représentés aux Figs. 6, 7 et 8 et comprenant des informations utilisées respectivement par le module de référence d'étiquettes 103, le module d'interprétation 104 et le module de commande robot 105. La mémoire non volatile 302 est par exemple un disque dur.

De manière plus générale, les programmes selon la présente invention sont mémorisés dans un moyen de stockage. Ce moyen de stockage est lisible par un ordinateur ou un microprocesseur 300. Ce moyen de stockage est intégré ou non au serveur de télésurveillance 100, et peut être amovible. Lors de la mise sous tension du serveur de télésurveillance 100 ou lors du lancement d'une application de télésurveillance, les programmes qui seront décrits ultérieurement en référence aux Figs. 4, 5a et 5b, les différents modules selon l'invention ainsi que les différents tableaux sont transférés dans la mémoire vive 303 qui contient alors le code exécutable de l'invention ainsi que les données nécessaires à la mise en oeuvre de l'invention.

Le serveur de télésurveillance 100 comporte aussi un écran 304 et un clavier 305 servant d'interface homme machine avec l'utilisateur du système de télésurveillance selon la présente invention. Par l'intermédiaire de cette interface homme machine, l'utilisateur définit un parcours que le robot aura à accomplir dans l'habitation à des moments prédéterminés. Par l'intermédiaire de cette même interface homme machine, l'utilisateur définit le long du parcours, des points, appelés points chauds, auxquels le robot 180 devra exécuter un certain nombre de captures d'informations. Le parcours ainsi que les points chauds seront explicités plus en détail en référence à la Fig. 3.

Le serveur de télésurveillance 100 comporte aussi une interface réseau de télécommunication 160. Cette interface est par exemple constituée d'un modem de type ADSL apte à communiquer avec un dispositif de commande 110 par l'intermédiaire du réseau de télécommunication 150.

Le serveur de télésurveillance 100 comporte aussi une interface réseau de télécommunication sans fil 170. Cette interface est par exemple une interface radio sans fil conforme à la norme 802.11.

La base de données 106 mémorise les différentes images ou séquences d'images prises par la caméra 180d du robot 180 à chaque passage du robot par un point chaud ainsi que les valeurs relevées par les différents capteurs du robot 180.

La Fig. 3 représente un exemple de parcours prédéfini effectué par un robot de télésurveillance selon la présente invention.

Le parcours est par exemple défini de manière graphique par l'utilisateur du système selon la présente invention à l'aide d'un ordinateur ou défini à partir d'une succession de commandes générées par l'utilisateur par l'intermédiaire d'un dispositif de commande 110. Cette succession de commandes est ensuite mémorisée par le serveur de télésurveillance 100 comme étant le chemin défini par l'utilisateur.

En variante, le parcours est défini par une succession de coordonnées. La Fig. 3 représente de manière graphique la visualisation du chemin défini et la position du robot 180 dans ce chemin. Cette représentation est par exemple transférée au dispositif de commande 110 lorsqu'un événement a été détecté par le système de télésurveillance selon la présente invention. Un chemin défini par un utilisateur dans un environnement 500 doit, selon la présente invention, partir et s'arrêter à un point prédéterminé. Ce point prédéterminé noté 510 est par exemple le point auquel le robot 180 recharge ses accumulateurs d'énergie ou le point auquel le robot 180 est considéré comme étant au repos.

Le parcours de référence est constitué d'une succession de déplacements selon différentes directions. Les lignes 531 à 536 de la Fig. 3 représentent ces déplacements. Les lignes 531 et 532 représentent le trajet déjà effectué par le robot 180, les lignes 533 à 536 représentent le trajet restant à effectuer par le robot 180.

Les points 521 à 524 sont des points chauds définis par l'utilisateur du système de télésurveillance. A chacun de ces points chauds, le robot 180 transfère des informations audiovisuelles au serveur de télésurveillance 100. A ces mêmes points chauds, le robot 180 transfère aussi les valeurs mesurées par les différents capteurs au serveur de télésurveillance 100. Un point chaud est défini en mémorisant dans le robot les coordonnées correspondantes à ce point chaud. A un point chaud, sont associées une étiquette et une valeur. La valeur de l'étiquette comprend les coordonnées du point chaud permettant au robot de se déplacer vers celui-ci.

La Fig. 4 représente un algorithme effectué par le serveur de télésurveillance de détection et de notifications d'évènements selon la présente invention.

L'étape E600 est une boucle d'attente de l'activation du présent algorithme. En effet, le parcours de référence tel que défini par l'utilisateur du système de télésurveillance est exécuté par le robot 180 périodiquement ou à des horaires définis par l'utilisateur. Lorsque le chemin doit être parcouru une nouvelle fois par le robot 180, le processeur 300 passe à l'étape E601.

A l'étape E601, le processeur 300 lit les informations représentatives du parcours de référence défini par l'utilisateur et mémorisées dans la base de données 106. Les informations représentatives du parcours sont une suite d'instructions telles que celles qui seront décrites ultérieurement en référence à la Fig. 8.

Ces informations lues, le processeur 300 passe à l'étape suivante E602 et procède au transfert de ces informations au robot 180. Ces informations sont transférées par l'intermédiaire de l'interface réseau de télécommunication sans fil 170, du réseau de télécommunication 190. Le robot 180 exécute alors cette suite d'instructions. En variante, le module de commande 180a du robot 180 mémorise cet ensemble d'instructions et exécute celles-ci à la réception d'une commande prédéterminée du serveur de télésurveillance 100.

L'étape suivante E603 consiste en une boucle d'attente de la réception de données du robot 180 par l'intermédiaire du réseau de télécommunication 190. Ces données sont par exemple une prise de vue effectuée par la caméra 180d du robot 180 ou une mesure de température effectuée par le capteur de température du robot 180. La prise de vue ainsi que la mesure de la température sont transférées par l'intermédiaire du réseau de télécommunication 190 au serveur de télésurveillance 100 lorsque le robot 180 passe par un point tel que par exemple le point chaud 521 de la Fig. 3.

A la réception de ces données, le processeur 300 mémorise à l'étape E604 les données reçues dans la base de données 106.

A l'étape suivante E605, le processeur 300 consulte la base de données 106 et lit les données qui ont été mémorisées pour le même point chaud lors de précédents passages du robot 180. Selon notre exemple, le processeur 300 lit les données qui ont été mémorisées pour le point chaud 521 lors du précédent passage du robot 180 à ce point.

Cette opération effectuée, le processeur 300 vérifie à l'étape E606 si les données reçues à l'étape 603 sont comparables avec les données lues à l'étape E605. Lorsque ces données sont par exemple une prise de vue, le processeur 300 exécute un algorithme de traitement d'images pour déterminer si l'image reçue à l'étape E603 est significativement différente de l'image lue à l'étape E605. Le robot 180 exécutant périodiquement le même parcours, les images sont prises périodiquement au même endroit, selon le même angle de prise de vue et sont donc, dans des conditions normales, semblables.

Si les images sont semblables, le processeur 300 passe à l'étape suivante E607. A cette étape, le processeur 300 vérifie s'il reste encore d'autres points chauds dans le parcours prédéfini qu'exécute périodiquement le robot 180.

Si le robot 180 est passé par tous les points chauds définis dans le parcours de référence défini par l'utilisateur, le processeur 300 arrête le présent algorithme et retourne à l'étape E600 en attente d'une nouvelle activation du présent algorithme.

Si le robot 180 n'est pas passé par tous les points chauds définis dans le parcours de référence, le processeur 300 retourne à l'étape E603 précédemment décrite et réitère la boucle constituée des étapes E603 à E607 tant que le robot 180 ne sera pas passé par tous les points chauds définis dans le parcours.

Si les données reçues à l'étape 603 ne sont pas comparables avec les données lues à l'étape E605, le processeur 300 passe à l'étape E608. L'étape E608 est une étape de classification de la comparaison effectuée à l'étape E606. Dans le cas d'une image, si la comparaison effectuée à l'étape E606 fait apparaître des différences significatives, mais que le processeur 300 ne peut effectuer une interprétation des différences, le processeur 300 classifie celle-ci comme une alarme non interprétée. Si par contre, la comparaison effectuée à l'étape E606 fait apparaître des différences significatives que le processeur 300 associe à une silhouette humaine; le processeur 300 classifie celle-ci comme une intrusion. Dans le cas de mesures effectuées par un capteur infrarouge, une détection de mouvement est classifiée par le processeur 300 comme une intrusion. Dans le cas de mesures de température, une variation importante de la température est classifiée par le processeur 300 comme une anomalie technique.

Cette opération effectuée, le processeur 300 passe à l'étape suivante E609 qui consiste à transférer un message d'alerte au dispositif de commande 110 de l'utilisateur du système de télésurveillance. Ce message d'alerte est transmis sous la forme d'un message électronique tel qu'un courrier électronique par l'intermédiaire du réseau de télécommunication 150 et comprend des informations représentatives de la classification préalablement effectuée à l'étape E608.

En variante, le message est transmis à l'utilisateur du système de télésurveillance par l'intermédiaire d'un réseau cellulaire sous la forme d'un message de service court SMS, acronyme de Short Message Service.

Les Figs. 5a et 5b représentent l'algorithme de traitement de commandes effectué par le serveur de télésurveillance 100, les commandes étant générées par un dispositif de commande 110 distant pour le contrôle du robot.

A l'étape E700, le processeur 300 du serveur de télésurveillance 100 reçoit un message de connexion d'un dispositif de commande 110 par l'intermédiaire du réseau de télécommunication 150 et de l'interface réseau de télécommunication 160.

A l'étape suivante E701, le processeur 300 détermine le type de dispositif 110 de commande à l'origine du message de connexion. Le dispositif de commande 110 peut être un ordinateur 110a, un téléphone mobile 110b ou un assistant personnel 110c.

Le type de dispositif de commande déterminé, le processeur 300 commande à l'étape E702 le transfert d'une page servant d'interface homme machine avec l'utilisateur du système de télésurveillance. L'interface homme machine transférée est adaptée au type de dispositif de commande 110. Si le dispositif de traitement 110 déterminé est un ordinateur 110a, le processeur 300 commande, au module de présentation dédié à l'ordinateur 101a, le transfert d'une page à destination de l'ordinateur 110a. Si le dispositif de traitement 110 déterminé est un téléphone mobile 110b, le processeur 300 commande, au module de présentation dédié au téléphone mobile 101b, le transfert d'une page à destination du téléphone mobile 110b. Si le dispositif de traitement déterminé 110 est un assistant personnel 110c, le processeur 300 commande, au module de présentation dédié à l'assistant personnel 101c, le transfert d'une page à destination de l'assistant personnel 110c. Il est à remarquer ici que chacun des modules de présentation 101 transfère des pages adaptées aux caractéristiques du dispositif de commande 110. Ces caractéristiques sont les caractéristiques de l'écran du dispositif de commande 110 ou les caractéristiques du clavier ou d'autres moyens de saisie ou d'activation dont disposent les dispositifs de commande 110. Par exemple, pour un ordinateur 110a, la page informe l'utilisateur de la possibilité de commander le robot par l'intermédiaire de touches prédéterminées du clavier de l'ordinateur 110a

Cette opération effectuée, le processeur 300 passe à l'étape suivante E703. A cette étape, le processeur 300 du serveur de télésurveillance 100 attend la réception, par l'intermédiaire du réseau de télécommunication 150 et de l'interface réseau de télécommunication 160, d'un message du dispositif de commande 110 auquel une page a été transférée. A la réception d'un message du dispositif de commande 110 auquel une page a été transférée, le processeur 300 passe à l'étape suivante E704.

A cette étape, le processeur 300 détermine si le message est représentatif d'une commande pour l'obtention d'une prise de vue. Par l'intermédiaire de la page précédemment transférée, l'utilisateur du système de télésurveillance peut en effet envoyer plusieurs commandes.

Dans l'affirmative, le processeur 300 passe à l'étape E705 et accède à la base de données 106 pour obtenir les différentes images ou séquences d'imagés mémorisées lors de l'exécution par le robot 180 d'un parcours de référence.

Cette opération effectuée, le processeur 300 transfère à l'étape E706 les différentes images ou séquences d'images précédemment obtenues à l'étape E705. Dans un mode préféré, le processeur 300 ne transfère seulement que des images ou séquences d'images relatives à un point chaud.

Le processeur retourne ensuite à l'étape E703 précédemment décrite.

Si le message reçu à l'étape E703 ne comprend pas de commande de prise de vue, le processeur 300 passe de l'étape E704 à l'étape E707. A cette étape, le processeur 300 détermine si le message est représentatif d'une commande pour l'obtention de valeurs de capteurs. Dans l'affirmative, le processeur 300 passe à l'étape E708 et accède à la base de données 106 pour obtenir les différentes valeurs des capteurs que le robot 180 a transférées lors de son passage à des points chauds lors de l'exécution d'un parcours de référence.

Cette opération effectuée, le processeur 300 transfère à l'étape E709 les différentes valeurs précédemment obtenues à l'étape E708. Dans un mode préféré, le processeur 300 ne transfère seulement que les valeurs des capteurs relatives à un point chaud. Le processeur retourne ensuite à l'étape E703 précédemment décrite.

Si le message reçu à l'étape E703 ne comprend pas de commande de valeurs de capteurs, le processeur 300 passe de l'étape E707 à l'étape E710. A cette étape, le processeur 300 détermine si le message est représentatif d'une requête de télécommande du robot 180. En effet, l'utilisateur du système de télésurveillance selon la présente invention peut à la fois recevoir des informations mémorisées précédemment par le serveur de télésurveillance 100 lors de l'exécution d'un trajet défini par le robot 180 et commander le déplacement du robot 180 à travers l'environnement 500.

Dans la négative, le processeur 300 détermine si le message est représentatif d'une fin de communication avec le dispositif de commande 110. Si le message est représentatif d'une fin de communication, le processeur 300 arrête le présent algorithme. Si le message n'est pas représentatif d'une fin de communication, le processeur 300 retourne ensuite à l'étape E703 précédemment décrite.

Si le message est représentatif d'une requête de télécommande du robot 180 par l'utilisateur du système de télésurveillance, le processeur 300 commande à l'étape E720 le transfert d'une page servant d'interface homme machine avec l'utilisateur du système de télésurveillance pour la commande du robot 180. L'interface homme machine transférée est adaptée au type de dispositif de commande 110.

Le processeur 300 commande ensuite à l'étape E721 le transfert d'une carte représentant le chemin défini dans l'environnement ainsi que la position du robot 180 dans cet environnement. Cette carte est par exemple conforme à la Fig. 3 et est reproduite par l'écran du dispositif de commande 110.

Cette opération effectuée, le processeur 300 passe à l'étape E722 qui est une boucle d'attente de la réception d'une commande ou à distance du robot 180 par l'utilisateur du dispositif de commande 110. Cette commande est issue de l'ordinateur 110a ou du téléphone mobile 110b ou de l'assistant personnel 110c.

Cette commande est une commande générée à partir d'une page de commande représentant huit axes de déplacement du robot. Ces axes sont le Nord, le Sud, l'Est, l'Ouest, le Nord-Ouest, le Nord-Est, le Sud-Est et le Sud-Ouest.

Il est à remarquer que dans un exemple particulier, le robot 180 interprète une commande selon l'axe Nord comme une commande de déplacement du robot selon l'axe dans lequel il se trouve. Le robot 180 interprète aussi une commande selon l'axe Sud comme une commande de déplacement vers l'arrière. Le robot 180 interprète aussi une commande selon l'axe Ouest comme une commande de déplacement vers la gauche. Le robot 180 interprète aussi une commande selon l'axe Est comme une commande de déplacement vers la droite.

Cette commande peut aussi être une commande générée par un appui sur des touches de navigation dans des menus déroulants d'un téléphone mobile 110b.

Cette commande peut aussi être une commande générée par un appui sur des touches de directions d'un clavier d'un ordinateur 110a.

Cette commande peut aussi être une commande de déplacement vers un des points chauds définis dans le parcours. Cette commande est effectuée par exemple en sélectionnant un des points chauds reproduits dans la représentation graphique du chemin défini.

A la réception de cette commande, le processeur 300 passe à l'étape E723. A cette étape, le processeur 300 détermine si la commande est une commande sous la forme d'une étiquette et d'une valeur associée ou si la commande est représentative d'un appui sur une touche prédéterminée du clavier du dispositif de commande 110. Si la commande est une commande sous la forme d'une étiquette et d'une valeur associée, le processeur passe à l'étape E725.

Si la commande est représentative d'un appui sur une touche prédéterminée du clavier du dispositif de commande 110, le processeur 300 passe à l'étape E724 et transfère au module de référence d'étiquettes 103 la commande reçue et traitée par le module de représentation 101 correspondant au dispositif de commande 110 utilisé par l'utilisateur du système de télésurveillance. Le module de référence d'étiquettes 103 associe à une commande effectuée l'utilisateur sur le dispositif de commande 110, une information prédéterminée. Par exemple, lorsque l'utilisateur du dispositif de commande 110a a appuyé sur une touche de direction du clavier du dispositif 110a, par exemple la flèche « ↑ », la commande reçue est interprétée par le module de référence d'étiquettes 103 comme étant une commande dont l'étiquette associée est direction et la valeur de cette étiquette est « Nord ». Pour cela, le module de référence d'étiquettes 103 utilise le tableau qui sera décrit ultérieurement en référence à la Fig. 6. Cette opération effectuée, le processeur 300 passe à l'étape suivante E725.

A l'étape E725, le processeur 300 transfère le nom de l'étiquette et sa valeur précédemment déterminés par le module de référence d'étiquettes 103 au module d'interprétation 104. Le module d'interprétation 104 détermine le paramètre script correspondant à l'étiquette et à sa valeur. Le paramètre script correspondant est plus précisément le programme équivalent à l'étiquette et sa valeur écrit dans le langage PHP, ou « Hypertext PreProcessor ». Ce langage, couramment utilisé pour la programmation de sites Internet, est un langage de scripts. Par exemple, lorsque le nom de l'étiquette est direction et sa valeur est « Nord », le paramètre script équivalent est :RobtNum=n, Direction= Nord, Vitesse=v. Selon cet exemple, à une étiquette direction de valeur Nord, correspondent les paramètres numéro de robot 180 « RobtNum=n », la direction et sa valeur « Direction= Nord » ainsi que la vitesse du robot «Vitesse=v ». Pour cela, le module d'interprétation 104 utilise le tableau qui sera décrit ultérieurement en référence à la Fig. 7.

Il est à remarquer qu'en variante, le dispositif de commande 110 transfère le paramètre script correspondant à l'étiquette. Dans cette variante, le processeur 300 n'effectue pas l'étape E725 et passe directement à l'étape E726.

Il est à remarquer ici que lorsque l'étiquette est une étiquette de macro-commande, le module d'interprétation 104 interroge le module d'interprétation de macro-commandes 102 pour que celui-ci délivre en retour une suite d'étiquettes et de valeurs correspondant à cette étiquette de macro-commande.

Cette opération effectuée, le processeur 300 passe à l'étape suivante E726.

A l'étape E726, le processeur 300 transfère le paramètre script au module de commande robot 105. Le module de commande robot 105 assure le transfert des ordres de commande au robot 180. A partir du paramètre script en langage PHP, le module de commande robot 105 détermine les commandes correspondantes dans le langage interprété par le robot 180. Le module de commande robot 105 est par exemple écrit dans le langage « C++ » et est spécifique au robot à commander. Par exemple, lorsque le nom de l'étiquette est direction et sa valeur est « Nord », le paramètre script équivalent est :RobtNum=n, Direction= Nord, Vitesse=v, le module de commande robot 105 détermine les commandes suivantes Robot.EXE ROBOTNUM n DIRECTION Nord VITESSE v. Pour cela, le module de commande robot 105 utilise le tableau qui sera décrit ultérieurement en référence à la Fig. 8.

Le processeur 300 transfère ensuite à l'étape E727 les commandes déterminées au robot 180 par l'intermédiaire du réseau de télécommunication 190.

Il est à remarquer qu'en variante, le dispositif de commande 110 transfère les commandes interprétables par le robot 180. Dans cette variante, le processeur 300 n'effectue pas l'étape E726 et passe directement à l'étape E727.

Il est à remarquer ici que le traitement en trois étapes E724, E725 et E726 effectué selon l'invention permet au système de télésurveillance d'être rendu compatible de manière aisée avec différents types de dispositifs de commande 110, de robots 180, voire d'autres équipements.

Cette opération effectuée, le processeur 300 reçoit à l'étape E728 une image ou une séquence d'images du robot 180 et/ou des relevés de mesures des capteurs par l'intermédiaire du réseau de télécommunication 190.

A l'étape suivante E729, le processeur 300 met en forme l'image ou la séquence d'images reçues dans un format adapté à une transmission sur le réseau de télécommunication 150 et au dispositif de commande 110.

Cette opération effectuée, le processeur 300 détermine à l'étape E730 la position à laquelle se trouve le robot 180. La position est déterminée à partir de la position du point prédéterminé noté 510 en Fig. 3 et des différentes commandes précédemment transmises au robot 180.

Cette opération effectuée, le processeur 300 transfère à l'étape E731 l'image ou la séquence d'images mise en forme au dispositif de commande 110 et/ou des relevés de mesures des capteurs.

Le processeur 300 transfère aussi à l'étape E732 la position du robot 180 au dispositif de commande 110.

L'image, la séquence d'images sont reproduites par le dispositif de traitement 110 permettant ainsi à l'utilisateur du système de télésurveillance d'être informé des différents évènements qui sont survenus dans l'environnement à surveiller. La position du robot dans la carte représentant le chemin défini dans l'environnement et reproduite par le dispositif de commande 110 est modifiée permettant ainsi à l'utilisateur de savoir où le robot se trouve précisément.

A l'étape E733, le processeur 300 vérifie si d'autres commandes sont générées par l'utilisateur du système de télésurveillance. Dans l'affirmative, le processeur 300 retourne à l'étape E722 précédemment décrite et réitère la boucle constituée des étapes E722 à E733 tant que l'utilisateur génère de nouvelles commandes. Dans la négative, le processeur 300 arrête le présent algorithme.

La Fig. 6 représente un tableau comprenant des informations utilisées par le module de référence aux étiquettes selon la présente invention.

Le tableau de la Fig. 6 est constitué de trois colonnes notées 820 à 822.

La colonne 820 comprend des exemples de commandes ou ordres générés par l'utilisateur d'un dispositif de commande 110.

La colonne 821 comprend le nom de l'étiquette associée à chacune des commandes comprises dans la colonne 820 et la colonne 822 comprend la valeur de l'étiquette associée à chacune des commandes comprises dans la colonne 820.

Le tableau de la Fig. 6 est constitué de douze lignes. A chaque ligne correspond une commande effectuée par l'utilisateur d'un dispositif de commande.

Bien entendu, un nombre plus important ou plus réduit de commandes peut être considéré selon la présente invention. Par exemple une commande de déplacement du robot à un point chaud par un appui prédéterminé sur une touche du clavier peut être aussi associée à une étiquette et une valeur de déplacement à la coordonnée du point chaud. Il est à remarquer ici que la coordonnée du point chaud est définie à partir de la référence du point 510 de la Fig. 3.

La ligne 800 associe à la commande « ↑ », une étiquette Direction ayant la valeur Nord. La ligne 801 associe à la commande « ↓ », une étiquette Direction ayant la valeur Sud. La ligne 802 associe à la commande «←», une étiquette Direction ayant la valeur Ouest. La ligne 803 associe à la commande « → », une étiquette Direction ayant la valeur Est. La ligne 804 associe à la commande « ↖ », une étiquette Direction ayant la valeur Nord-Ouest. La ligne 805 associe à la commande «↗ », une étiquette Direction ayant la valeur Nord-Est. La ligne 806 associe à la commande « ↙ », une étiquette Direction ayant la valeur Sud-Ouest. La ligne 807 associe à la commande «↘ », une étiquette Direction ayant la valeur Sud-Est. La ligne 808 associe à la commande Réflexe, une étiquette Commande robot ayant la valeur ON ou OFF, c'est-à-dire actif ou inactif. La commande Réflexe est une commande permettant au robot 180 d'entrer dans une procédure de détection automatique d'obstacles et de modification de ses déplacements en fonction des obstacles détectés. Lors de la procédure de détection automatique d'obstacles, le robot 180 transmet au serveur de télésurveillance 100 toute modification de déplacement en fonction des obstacles détectés qu'il effectue. La ligne 809 associe à la commande vitesse de déplacement, une étiquette Vitesse ayant une valeur définie par l'utilisateur. Cette valeur paramétrable permet de modifier la vitesse de déplacement du robot 180. La ligne 810 associe à la commande mesure température, une étiquette Temp ayant comme valeur la variable Tempin dont la valeur est la température mesurée par le robot. La ligne 811 associe à la commande indice robot permettant de sélectionner un robot parmi un ensemble de robots, une étiquette Robotnum ayant comme valeur un indice affecté préalablement au robot que l'utilisateur du système de télésurveillance désire commander.

La Fig. 7 représente un tableau comprenant des informations utilisées par le module d'interprétation des étiquettes selon la présente invention.

Le tableau de la Fig. 7 est constitué de trois colonnes notées 920 à 922.

La colonne 920 comprend le nom de l'étiquette associée à chacune des commandes comprises dans la colonne 820 de la Fig. 6 précédemment décrite ou reçue du dispositif de commande 110. La colonne 921 comprend la valeur de l'étiquette associée à chacune des commandes comprises dans la colonne 820 de la Fig. 6 ou reçue du dispositif de commande 110.

Le tableau de la Fig. 7 est constitué de douze lignes. A chaque ligne correspond une étiquette et sa valeur ainsi que le paramètre script décrit selon notre exemple dans le langage PHP. Bien entendu, un nombre plus important d'étiquettes et de valeurs telles que des étiquettes de déplacement à un point chaud ou un nombre plus réduit d'étiquettes et de valeurs peut être considéré selon la présente invention.

La ligne 900 associe à l'étiquette Direction dont la valeur est Nord le paramètre script numéro de robot « RobtNum=n », direction et valeur « Direction= Nord » ainsi que la vitesse du robot «Vitesse=v ». La ligne 901 associe à l'étiquette Direction dont la valeur est Sud le paramètre script numéro de robot « RobtNum=n », direction et valeur « Direction= Sud » ainsi que la vitesse du robot «Vitesse=v ». La ligne 902 associe à l'étiquette Direction dont la valeur est Ouest le paramètre script numéro de robot « RobtNum=n », direction et valeur « Direction= Ouest » ainsi que la vitesse du robot «Vitesse=v ». La ligne 903 associe à l'étiquette Direction dont la valeur est Est le paramètre script numéro de robot « RobtNum=n », direction et valeur « Direction= Est » ainsi que la vitesse du robot «Vitesse=v ». La ligne 904 associe à l'étiquette Direction dont la valeur est Nord-Ouest le paramètre script numéro de robot « RobtNum=n », direction et valeur « Direction= Nord-Ouest » ainsi que la vitesse du robot «Vitesse=v ». La ligne 905 associe à l'étiquette Direction dont la valeur est Nord-Est le paramètre script numéro de robot « RobtNum=n », direction et valeur « Direction= Nord-Est » ainsi que la vitesse du robot «Vitesse=v ». La ligne 906 associe à l'étiquette Direction dont la valeur est Sud-Ouest le paramètre script numéro de robot « RobtNum=n », direction et valeur « Direction= Sud-Ouest » ainsi que la vitesse du robot «Vitesse=v ». La ligne 907 associe à l'étiquette Direction dont la valeur est Sud-Est le paramètre script numéro de robot « RobtNum=n », direction et valeur « Direction= Sud-Est » ainsi que la vitesse du robot «Vitesse=v ». La ligne 908 associe à l'étiquette Commande robot dont la valeur est Réflexe ON/OFF le paramètre script numéro de robot « RobtNum=n », Commande robot réflexe activé ou non « CommandeRobot= ReflexOn ou ReflexOff». La ligne 909 associe à l'étiquette Vitesse dont la valeur est définie v par l'utilisateur le paramètre script vitesse du robot «Vitesse=v ». La ligne 910 associe à l'étiquette Temp dont la Tempin est la température mesurée par le robot 180 le paramètre script numéro de robot « RobtNum=n » et mesure de température « Action=Tempin ». La ligne 911 associe à l'étiquette numéro de robot 180 le paramètre script numéro de robot « RobtNum=n » et ayant comme valeur un indice n affecté préalablement au robot que l'utilisateur du système de télésurveillance désire commander.

La Fig. 8 représente un tableau comprenant des informations utilisées par le module de commande robot selon la présente invention.

Le tableau de la Fig. 8 est constitué de deux colonnes notées 1020 et 1021. La colonne 1020 comprend le paramètre script décrit selon notre exemple dans le langage PHP à chacune des étiquettes ainsi que leur valeur comprises dans les colonnes 920 et 921 de la Fig. 7 précédemment décrite. La colonne 1021 comprend les commandes équivalentes au paramètre script de la colonne 1020 dans le langage de commande adapté au robot 180.

Le tableau de la Fig. 8 est constitué de douze lignes. A chaque ligne correspond un paramètre script décrit en langage PHP ainsi que les commandes équivalentes décrites dans le langage de commande adapté au robot 180. Bien entendu, un nombre plus important de paramètres script tels que des paramètres script de déplacement à un point chaud ou un nombre plus réduit de paramètres script peut être considéré selon la présente invention.

La ligne 1000 associe au paramètre script numéro de robot « RobtNum=n », direction et valeur Nord « Direction= Nord » ainsi que la vitesse du robot «Vitesse=v» les commandes « Robot.EXE ROBOTNUM n DIRECTION Nord VITESSE v » interprétables par le robot 180.

La ligne 1001 associe au paramètre script numéro de robot « RobtNum=n », direction et valeur Sud « Direction= Sud » ainsi que la vitesse du robot «Vitesse=v » les commandes « Robot.EXE ROBOTNUM n DIRECTION Sud VITESSE v » interprétables par le robot 180.

La ligne 1002 associe au paramètre script numéro de robot « RobtNum=n », direction et valeur Ouest « Direction= Ouest » ainsi que la vitesse du robot «Vitesse=v » les commandes « Robot.EXE ROBOTNUM n DIRECTION Ouest VITESSE v » interprétables par le robot 180.

La ligne 1003 associe au paramètre script numéro de robot « RobtNum=n », direction et valeur Est « Direction= Est » ainsi que la vitesse du robot «Vitesse=v » les commandes «Robot.EXE ROBOTNUM n DIRECTION Est VITESSE v » interprétables par le robot 180.

La ligne 1004 associe au paramètre script numéro de robot « RobtNum=n », direction et valeur Nord-Ouest « Direction= Nord-Ouest » ainsi que la vitesse du robot «Vitesse=v » les commandes « Robot.EXE ROBOTNUM n DIRECTION Nord-Ouest VITESSE v » interprétables par le robot 180.

La ligne 1005 associe au paramètre script numéro de robot « RobtNum=n », direction et valeur Nord-Est « Direction= Nord-Est » ainsi que la vitesse du robot «Vitesse=v » les commandes « Robot.EXE ROBOTNUM n DIRECTION Nord-Est VITESSE v » interprétables par le robot 180.

La ligne 1006 associe au paramètre script numéro de robot « RobtNum=n », direction et valeur Sud-Ouest « Direction= Sud-Ouest » ainsi que la vitesse du robot «Vitesse=v » les commandes « Robot.EXE ROBOTNUM n DIRECTION Sud-Ouest VITESSE v » interprétables par le robot 180.

La ligne 1007 associe au paramètre script numéro de robot « RobtNum=n », direction et valeur Sud-Est « Direction= Sud-Est » ainsi que la vitesse du robot «Vitesse=v » les commandes « Robot.EXE ROBOTNUM n DIRECTION Sud-Est VITESSE v » interprétables par le robot 180.

La ligne 1008 associe au paramètre script numéro de robot « RobtNum=n », activation ou désactivation de la procédure de détection automatique d'obstacles et de modification de ses déplacements en fonction des obstacles détectés ReflexOn ou ReflexOff « CommandeRobot=ReflexOn » ou « CommandeRobot=ReflexOff » les commandes « Robot.EXE ROBOTNUM n CommandeRobot REFLEX On » ou « Robot.EXE ROBOTNUM n CommandeRobot REFLEX Off ».

La ligne 1009 associe au paramètre script vitesse du robot «Vitesse=v » les commandes « Robot.EXE VITESSE v ».

La ligne 1010 associe au paramètre script mesure température « Action=Tempin » les commandes « Robot.EXE TEMP Tempin ».

La ligne 1011 associe au paramètre script numéro de robot « RobtNum=n » les commandes « Robot.EXE ROBOTNUM n».

Nous allons maintenant décrire un exemple de page transférée à un dispositif de commande tel qu'un téléphone mobile 110b. Cette page comprend des informations permettant l'affichage sur l'écran du téléphone mobile 110b d'une interface homme machine telle que représentée en Fig. 9.

Cette page permet la commande du robot 180 par l'utilisateur du système de télésurveillance par l'intermédiaire des réseaux de télécommunication 150 et 190 et du serveur de télésurveillance 100. Cette page est transmise par le serveur de télésurveillance 100 sous la forme d'un fichier PHP.

Le fichier PHP comprend une déclaration du document HTML incluant des commandes PHP ainsi que des étiquettes indiquant que cette page ne doit pas être mémorisée dans la mémoire cache du navigateur du dispositif de commande 110b ainsi que le titre de la page HTML. Cette partie de fichier est de la forme :

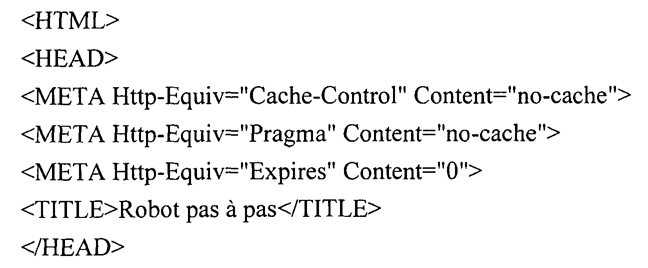

Le fichier PHP comprend aussi les définitions des marges de la page et un tableau pour représenter les différents boutons d'action permettant la commande du robot et l'envoi d'étiquettes associées. Cette partie de fichier est de la forme :

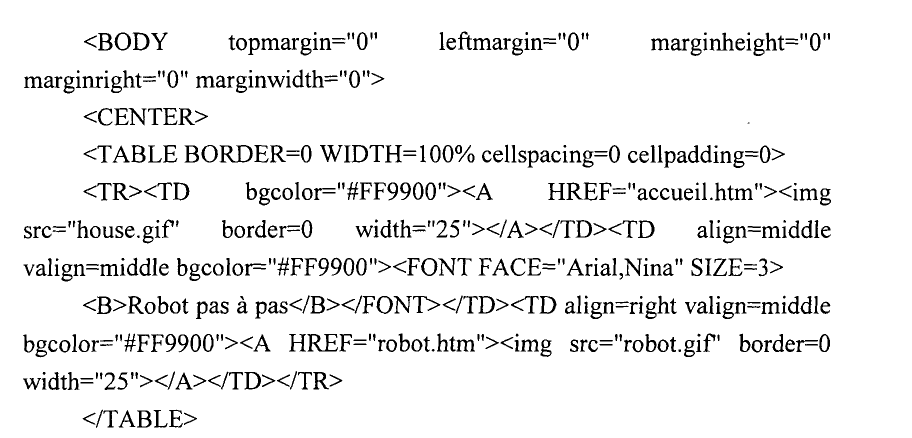

Le fichier PHP comprend aussi les informations permettant la récupération par le script PHP des valeurs correspondant aux étiquettes de directions 400, de commande robot 401 et de vitesse 402 et 403 représentées à la Fig. 9. Le fichier PHP comprend aussi les informations permettant le transfert des étiquettes au module PHP de traitement des étiquettes. Cette partie de fichier est de la forme :

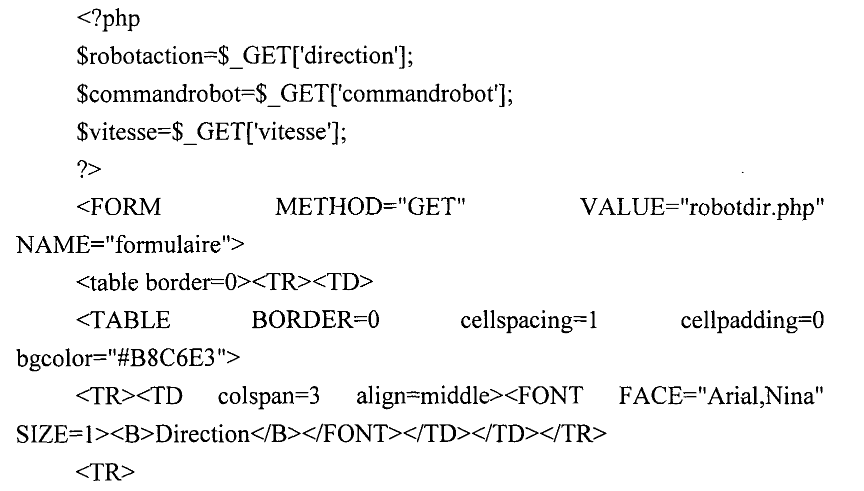

Le fichier PHP comprend aussi les informations permettant de définir les différentes valeurs de l'étiquette direction selon la zone activée par l'utilisateur. Ces valeurs sont au nombre de huit. La zone 410 représentée à la Fig. 9 correspond à une valeur Nord, la zone 411 représentée à la Fig. 9 correspond à une valeur Nord-Est, la zone 412 représentée à la Fig. 9 correspond à la valeur Est, la zone 413 représentée à la Fig. 9 correspond à la valeur Sud-Est, la zone 414 représentée à la Fig. 9 correspond à la valeur Sud, la zone 415 représentée à la Fig. 9 correspond à la valeur Sud-Ouest, la zone 416 représentée à la Fig. 9 correspond à la valeur Ouest et la zone 417 représentée à la Fig. 9 à la valeur Nord-Ouest.. Cette partie de fichier est de la forme :

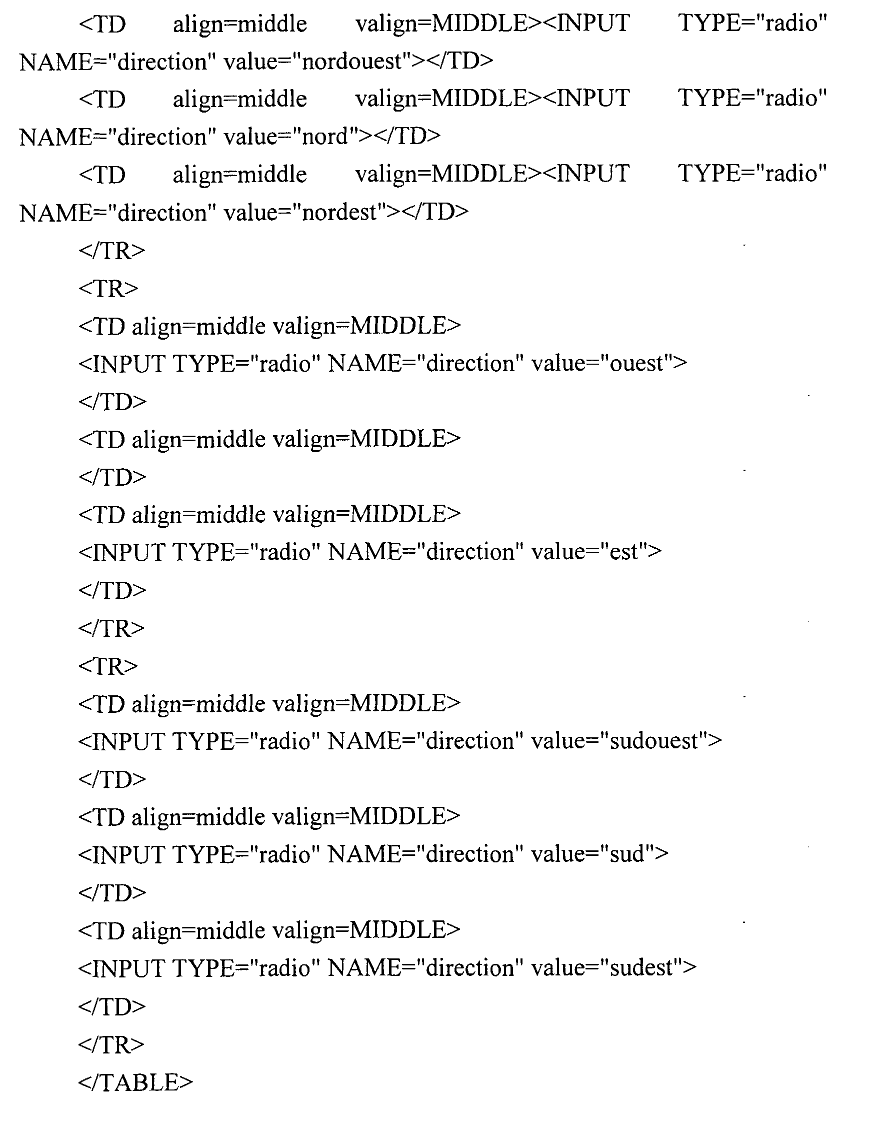

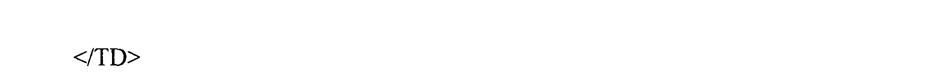

Le fichier PHP comprend aussi le tableau permettant de transmettre les différentes valeurs de l'étiquette commande robot selon la zone 401 de la Fig. 9 activée par l'utilisateur. Ces valeurs sont par exemple au nombre de trois. La zone 420 de la Fig. 9 correspond à une réinitialisation du système, la zone 421 de la Fig. 9 correspond à une activation du module de mesure de distances 180b entre le robot 180 et d'éventuels obstacles susceptibles de gêner le parcours du robot 180 et la zone 422 de la Fig. 9 correspond à une désactivation du module de mesure de distances 180b entre le robot 180 et d'éventuels obstacles susceptibles de gêner le parcours du robot 180. Cette partie de fichier est de la forme :

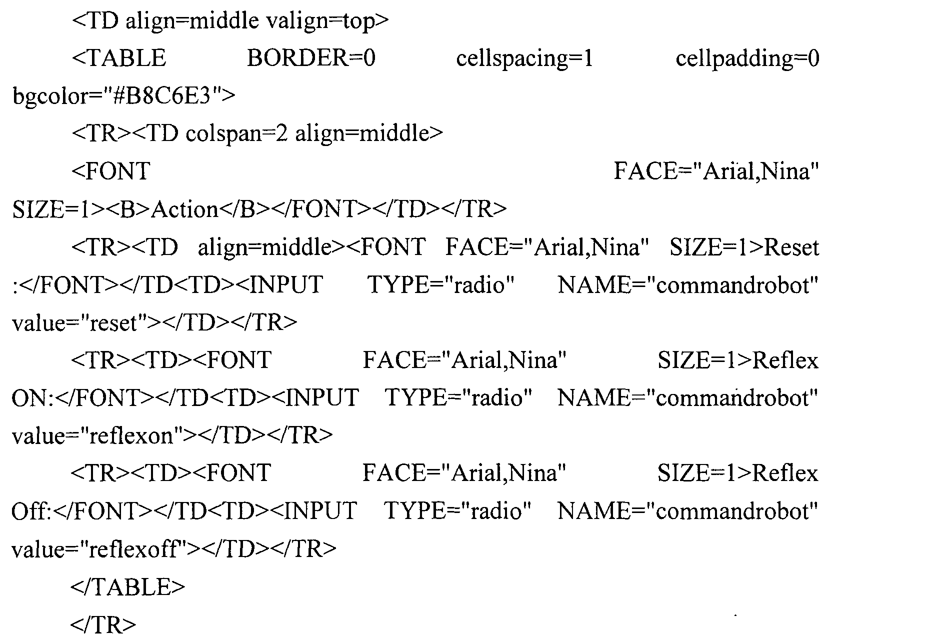

Le fichier PHP comprend aussi un menu déroulant 402, 403 de la Fig. 9 permettant de sélectionner une valeur de vitesse de déplacement du robot pour l'étiquette vitesse. Cette partie de fichier est de la forme :

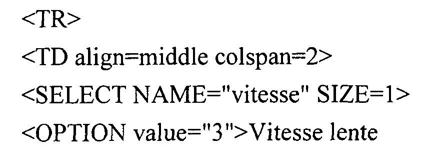

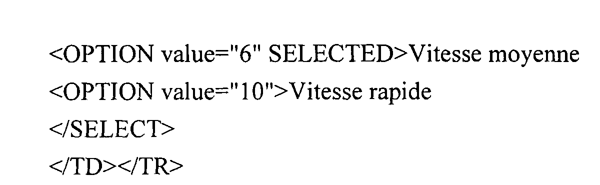

Le fichier PHP comprend aussi des données notées 404 en Fig. 9 permettant de valider le transfert d'une ou de plusieurs commandes au serveur de télésurveillance ainsi qu'un module d'interprétation des étiquettes. Cette partie de fichier est de la forme :

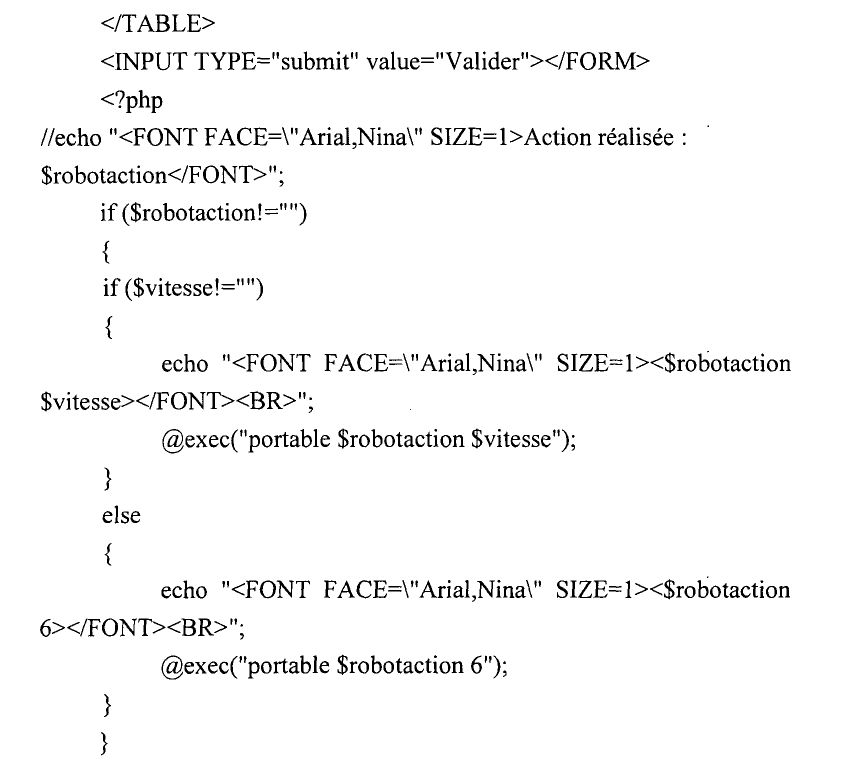

Le fichier PHP comprend aussi un module de commande du robot permettant l'envoi des commandes et paramètres de commandes interprétables par le robot 180. Cette partie de fichier est de la forme :

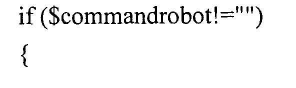

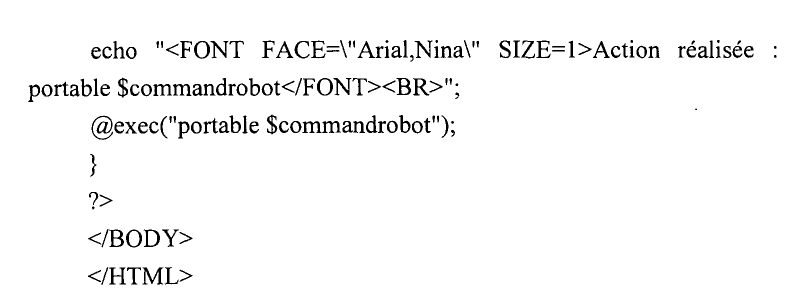

Bien entendu, la présente invention n'est nullement limitée aux modes de réalisation décrits ici, mais englobe, bien au contraire, toute variante à la portée de l'homme du métier.

## Revendications

1. Procédé de traitement d'une commande de robot (180) effectuée par l'intermédiaire d'un dispositif de commande (110a, 110b, 110c) distant faisant partie d'un groupe de dispositifs de commande distants, le dispositif de commande distant étant relié par un réseau de télécommunication (150) à un serveur (100), **caractérisé en ce que** le procédé comporte les étapes de :
- association (E725) à une étiquette et à une valeur d'étiquette d'une commande et/ou d'un paramètre de commande, l'étiquette et la valeur d'étiquette faisant partie d'un groupe prédéterminé d'étiquettes et de valeurs d'étiquettes connu des dispositifs de commande distants appartenant au groupe de dispositifs de commande distants,
- traduction (E726) de la commande et/ou du paramètre de commande en au moins une commande exécutable dans un langage interprétable par le robot,
- transfert (E727) de la ou de chaque commande exécutable audit robot.

2. Procédé selon la revendication 1, **caractérisé en ce que** le robot effectue un parcours de référence dans un environnement prédéterminé à des moments prédéterminés, le parcours de référence comprend des points prédéfinis (521, 522, 523, 524) et le serveur de télésurveillance (100) mémorise des informations obtenues par le robot aux points prédéterminés.

3. Procédé selon la revendication 2, **caractérisé en ce que** le procédé comporte en outre les étapes de :
- comparaison (E606) des informations mémorisées avec des informations d'un parcours de référence,
- génération d'au moins un message (E609) à destination du dispositif de commande si les informations mémorisées sont différentes des informations du parcours de référence.

4. Procédé selon l'une quelconque des revendications 1 à 3, **caractérisé en ce que** le procédé comporte en outre une étape de transfert de données représentatives d'une interface utilisateur (E720) au dispositif de commande distant pour commander le robot.

5. Procédé selon la revendication 4, **caractérisé en ce que** l'interface utilisateur est adaptée au type de dispositif de commande.

6. Procédé selon la revendication 4 ou 5, **caractérisé en ce que** le robot évolue dans un environnement prédéterminé et **en ce que** le procédé comporte les étapes de :
- détermination (E730) de la position du robot dans l'environnement prédéterminé,
- transfert d'une représentation graphique (E721) de l'environnement prédéterminé au dispositif de commande,
- transfert de la position déterminée (E732) au dispositif de commande.

7. Procédé selon l'une quelconque des revendications 4 à 6, **caractérisé en ce que** le procédé comporte en outre une étape de transfert d'informations (E731) obtenues par le robot sur l'environnement dans lequel il évolue.

8. Procédé selon la revendication 7, **caractérisé en ce que** les informations obtenues sont au moins une image ou des relevés de mesures de capteurs.

9. Procédé selon l'une quelconque des revendications 1 à 8, **caractérisé en ce que** le groupe prédéterminé d'étiquettes et de valeurs d'étiquettes comprend des étiquettes pour diriger le robot, des étiquettes de mise du robot dans un mode de fonctionnement prédéterminé, des étiquettes de définition de la vitesse du robot, des étiquettes de sélection d'un robot parmi un ensemble de robot et des étiquettes d'actionnement d'au moins un capteur du robot.

10. Procédé selon l'une quelconque des revendications 1 à 9, **caractérisé en ce que** le dispositif de commande est un ordinateur ou un téléphone mobile ou un assistant personnel et **en ce que** le serveur de télésurveillance comporte des modules d'interface respectivement adaptés aux dispositifs de commande.

11. Procédé selon l'une quelconque des revendications 1 à 10, **caractérisé en ce que** les informations transférées entre le serveur de télésurveillance et le robot sont transférées par l'intermédiaire d'un autre réseau de télécommunication sans fil.

12. Procédé selon l'une quelconque des revendications 1 à 10, **caractérisé en ce que** les informations transférées entre le serveur de télésurveillance et le robot sont transférées par l'intermédiaire du réseau de télécommunication, d'une passerelle entre le réseau de télécommunication et un autre réseau de télécommunication.

13. Serveur de télésurveillance pour le traitement d'une commande de robot effectuée par l'intermédiaire d'un dispositif de commande distant faisant partie d'un groupe de dispositifs de commande distants, le dispositif de commande étant relié par un réseau de télécommunication à un serveur, **caractérisé en ce que** le serveur comporte :
- des moyens d'association à une étiquette et à une valeur d'étiquette d'une commande et/ou d'un paramètre de commande, l'étiquette et la valeur d'étiquette faisant partie d'un groupe prédéterminé d'étiquettes et de valeurs d'étiquettes connu des dispositifs de commande distants appartenant au groupe de dispositifs de commande distants,
- des moyens de traduction de la commande et/ou du paramètre de commande en au moins une commande exécutable dans un langage interprétable par le robot,
- des moyens de transfert de la ou de chaque commande exécutable audit robot.

14. Etiquette pour la commande d'un robot par l'intermédiaire d'un dispositif de commande relié par un réseau de télécommunication à un serveur, **caractérisée en ce que** l'étiquette est une étiquette pour diriger le robot ou une étiquette de mise du robot dans un mode de fonctionnement prédéterminé ou une étiquette de définition de la vitesse du robot ou une étiquette de sélection d'un robot parmi un ensemble de robot ou une étiquette d'actionnement d'au moins un capteur du robot et **en ce qu'**à l'étiquette est associée une valeur.

15. Programme d'ordinateur stocké sur un support d'informations, ledit programme comportant des instructions permettant de mettre en oeuvre le procédé de traitement selon l'une quelconque des revendications 1 à 12, lorsqu'il est chargé et exécuté par un système informatique.
